# EUROPÄISCHE PATENTSCHRIFT

(11) **EP 1 775 496 B1**
(45) Veröffentlichungstag und Bekanntmachung des Hinweises auf die Patenterteilung: **06.11.2013**
(21) Anmeldenummer: 06019431.3
(22) Anmeldetag: 16.09.2006
(51) Int. Cl.: F16F 15/28, F16F 15/14, F16F 15/129

(54) **Drehschwingungsdämpfungseinrichtung**
Torsional vibration damper
Amortisseur de vibrations torsionelles

(30) Priorität: 13.10.2005 DE 102005049095
(43) Veröffentlichungstag der Anmeldung: 18.04.2007
(73) Patentinhaber: Schaeffler Technologies AG & Co. KG, 91074 Herzogenaurach (DE)
(72) Erfinder: Lehmann, Steffen, 76275 Ettlingen (DE); Sieber, Dimitri, 76275 Ettlingen (DE); Lehmann, Thilo, 76135 Karlsruhe (DE); Fechler, Christian, 76199 Karlsruhe (DE)

(56) Entgegenhaltungen:
- DE-A1- 10 039 640
- DE-A1- 19 949 206
- DE-U1- 20 209 545
- GB-A- 650 746

## Beschreibung

Die Erfindung betrifft eine Drehschwingungsdämpfungseinrichtung, insbesondere einen Wangentilger, zur Anbringung an einer Kurbelwelle eines Kolbenmotors, insbesondere einer Brennkraftmaschine, mit einem Gehäuse, das an der Kurbelwelle befestigt und mit dem, unter Zwischenschaltung von Federelementen, mindestens eine Schwungmasse gekoppelt ist, die im Wesentlichen die Gestalt einer Teilkreisringscheibe mit zwei Umfangsenden aufweist und an der radial außen mindestens eine Gleitfläche vorgesehen ist, die sich in Reibeingriff mit dem Gehäuse befindet.

Aufgabe der Erfindung ist es, eine Drehschwingungsdämpfungseinrichtung gemäß dem Oberbegriff des Anspruchs 1, wie sie zum Beispiel aus der deutschen Offenlegungsschrift DE 103 58 388 A1 oder DE 199 49 206 A1 bekannt ist, im Hinblick auf die Herstellkosten weiter zu optimieren.

Die Aufgabe ist bei einer Drehschwingungsdämpfungseinrichtung, insbesondere einem Wangentilger, zur Anbringung an einer Kurbelwelle eines Kolbenmotors, insbesondere einer Brennkraftmaschine, mit einem Gehäuse, das an der Kurbelwelle befestigt und mit dem, unter Zwischenschaltung von Federelementen, mindestens eine Schwungmasse gekoppelt ist, die im Wesentlichen die Gestalt einer Teilkreisringscheibe mit zwei Umfangsenden aufweist und an der radial außen mindestens eine Gleitfläche vorgesehen ist, die sich in Reibeingriff mit dem Gehäuse befindet, dadurch gelöst, dass die beiden Umfangsenden der Schwungmasse in Umfangsrichtung zwischen zwei Federelementen eingespannt sind, die eine relativ geringe Federsteifigkeit aufweisen. Die beiden Federelemente haben eine viel geringere Federsteifigkeit als die in herkömmlichen Drehschwingungsdämpfungseinrichtungen verwendeten Federelemente. Die Federelemente der erfindungsgemäßen Drehschwingungsdämpfungseinrichtung dienen zur Zentrierung und zur Rückstellung der Schwungmasse im Betrieb. Außerdem verhindern die Federelemente ein Anschlagen der Schwungmasse in Umfangsrichtung an das Gehäuse.

Ein bevorzugtes Ausführungsbeispiel der Drehschwingungsdämpfungseinrichtung ist dadurch gekennzeichnet, dass an den Umfangsenden der Schwungmasse jeweils eine Ausnehmung zur Aufnahme eines Endes des zugehörigen Federelements vorgesehen ist. Die Ausnehmung hat vorzugsweise im Wesentlichen die Gestalt eines Quaders.

Ein weiteres bevorzugtes Ausführungsbeispiel der Drehschwingungsdämpfungseinrichtung ist dadurch gekennzeichnet, dass die Federelemente jeweils in mindestens einer länglichen Aussparung des Gehäuses eingespannt sind. Die länglichen Aussparungen sind im Bereich der Ausnehmungen der Schwungmasse angeordnet.

Eine erfindungsgemäße Drehschwingungsdämpfungseinrichtung ist dadurch gekennzeichnet, dass die Schwungmasse einen radial nach außen verschobenen Schwerpunkt aufweist. Dadurch wird die fliehkraftabhängige Reibungsdämpfung verstärkt und eine stärkere Schwingungsankopplung durch Reibung erreicht.

Eine erfindungsgemäße Drehschwingungsdämpfungseinrichtung ist dadurch gekennzeichnet, dass die Schwungmasse in einem radial inneren, im Wesentlichen kreisbogenförmigen Bereich, mehrere Langlöcher aufweist. Durch die Langlöcher erstrecken sich Abstandsbolzen, die an dem Gehäuse befestigt sind. Die Langlöcher ermöglichen eine Bewegung der Schwungmasse in Umfangsrichtung relativ zu den Abstandsbolzen. Durch die Anordnung der Langlöcher in einem radial inneren Bereich kann der Schwerpunkt der Schwungmasse auf einfache Art und Weise radial nach außen verlagert werden.

Die Erfindung betrifft auch eine Kurbelwelle für einen Kolbenmotor, insbesondere eine Brennkraftmaschine, mit mehreren Wangen. Die Erfindung zeichnet sich dadurch aus, dass eine vorab beschriebene Drehschwingungsdämpfungseinrichtung in mindestens eine Wange der Kurbelwelle integriert ist.

Die Erfindung betrifft auch einen Kolbenmotor, insbesondere eine Brennkraftmaschine, mit einer vorab beschriebenen Kurbelwelle.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
Figur 1 eine perspektivische Darstellung eines auf eine Kurbelwelle montierten Drehschwingungsdämpfers;
Figur 2 eine perspektivische Darstellung des Drehschwingungsdämpfers aus Figur 1;
Figur 3 den Drehschwingungsdämpfer aus Figur 2 im Querschnitt;
Figur 4 den Drehschwingungsdämpfer aus Figur 2 im Längsschnitt und
Figur 5 eine Explosionsdarstellung des Drehschwingungsdämpfers aus Figur 2.

Drehschwingungsdämpfer, die auch als Schwingungstilger bezeichnet werden, werden eingesetzt, um unter anderem Torsionseigenfrequenzen von Kurbelwellen zu unterdrücken. Ein Schwingen in der Ei genfrequenz könnte zum Buch der Kurbelwelle führen, weshalb Drehschwingungsdämpfer beziehungsweise Drehschwingungstilger eingesetzt werden. Die Drehschwingungsdämpfungseinrichtung wird auch als Torsionsschwingungsdämpfungseinrichtung bezeichnet.

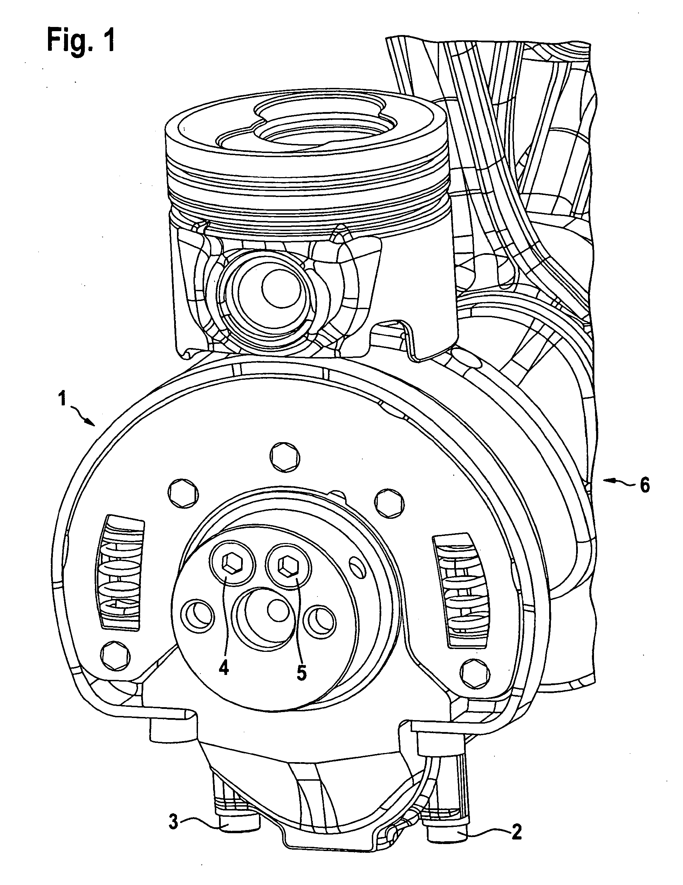

In Figur 1 ist ein Drehschwingungsdämpfer 1 gezeigt, der mit Hilfe von zwei Radialschrauben 2, 3 und zwei Axialschrauben 4, 5 an einer Kurbelwelle 6 befestigt ist. Der Schwingungsdämpfer 1 ersetzt gleichzeitig eines der Gegengewichte der Kurbelwelle 6.

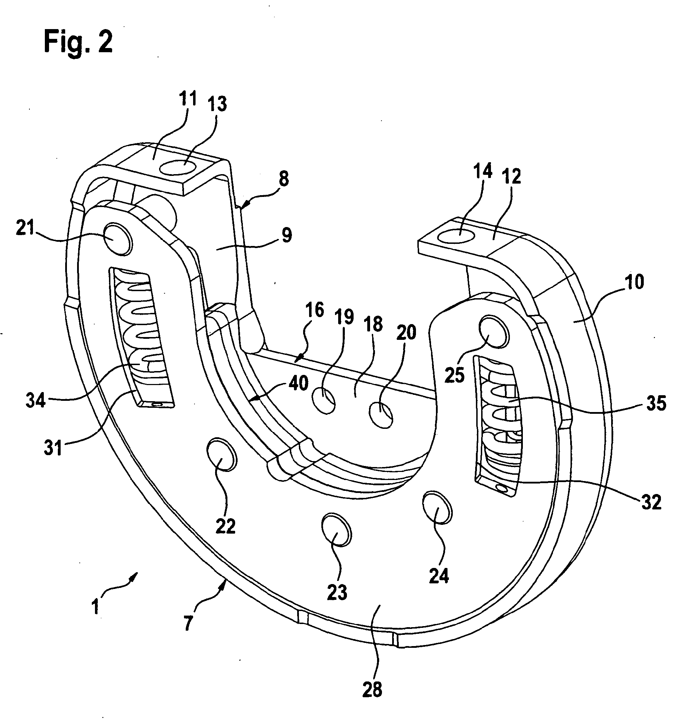

In den Figuren 2 bis 5 ist der Schwingungsdämpfer 1 in verschiedenen Ansichten dargestellt. Der Schwingungsdämpfer 1 umfasst ein Gehäuse 7, das zweiteilig ausgebildet ist. Das Gehäuse 7 umfasst einen Gehäuseboden 8, der im Wesentlichen die Gestalt einer Kreisscheibe 9 aufweist, deren Umfangsrand 10 in einem Winkel von 90° abgewinkelt ist. An dem abgewinkelten Umfangsrand 10 des Gehäusebodens 8 sind zwei Abflachungen 11, 12 ausgebildet, in denen Durchgangslöcher 13 und 14 ausgespart sind. Die Durchgangslöcher 13 und 14 dienen zum Durchführen der in Figur 1 dargestellten Radialschrauben 2, 3, die zur Befestigung der Drehschwingungsdämpfungseinrichtung 1 an der Kurbelwelle dienen. Zwischen den beiden Abflachungen 11, 12 ist in dem Gehäuseboden 8 eine im Wesentlichen rechteckförmige beziehungsweise quaderförmige Aussparung 16 angeordnet. Die Aussparung 16 ist an einer Seite offen und bildet einen Formschlussbereich, der eine formschlüssige Verbindung zwischen dem Gehäuseboden 8 und der Kurbelwelle ermöglicht. Im zentralen Bereich des Gehäusebodens 8 wird die rechteckförmige Aussparung 16 von einem kreissegmentförmigen Ansatz 18 begrenzt, in dem zwei Durchgangslöcher 19 und 20 vorgesehen sind. Die Durchgangslöcher 19 und 20 dienen zum Durchführen der in Figur 1 dargestellten Axialschrauben 4, 5, die zum Befestigen des Drehschwingungsdämpfers 1 an der Kurbelwelle dienen.

In einem axialen Abstand von der Kreisscheibe 9 ist an dem Gehäuseboden 8 mit Hilfe von fünf Abstandsbolzen 21 bis 25 ein Gehäusedeckel 28 befestigt. Der Gehäusedeckel 28 hat eine im Wesentlichen hufeisenförmige Gestalt. In den Umfangsenden des Gehäusedeckeis 28 sind zwei Fenster 31, 32 ausgespart. Die Fenster 31, 32 haben die Gestalt von Langlöchern, die sich in Umfangsrichtung erstrecken. In den Fenstern 31, 32 ist jeweils ein Federelement 34, 35 in Umfangsrichtung eingespannt. Bei den Federelementen 34, 35 handelt es sich um vorgespannte Schraubendruckfedern.

Durch die Abstandsbolzen 21 bis 25 wird zwischen der Kreisscheibe 9 des Gehäusebodens 8 und dem Gehäusedeckel 28 radial innerhalb des abgewinkelten Umfangsrands 10 des Gehäusebodens 8 ein Aufnahmeraum für eine Schwungmasse 40 geschaffen, die eine hufeisenförmige Gestalt aufweist. Bei der Schwungmasse 40 handelt es sich, wie bei dem Gehäuseboden 8 und dem Gehäusedeckel 28, um ein ausgestanztes Blechteil. An den Umfangsenden der Schwungmasse 40 ist jeweils eine Ausnehmung 41, 42 vorgesehen. Die Ausnehmung 41, 42 dient zur Aufnahme eines Endes des zugehörigen Federelements 34, 35.

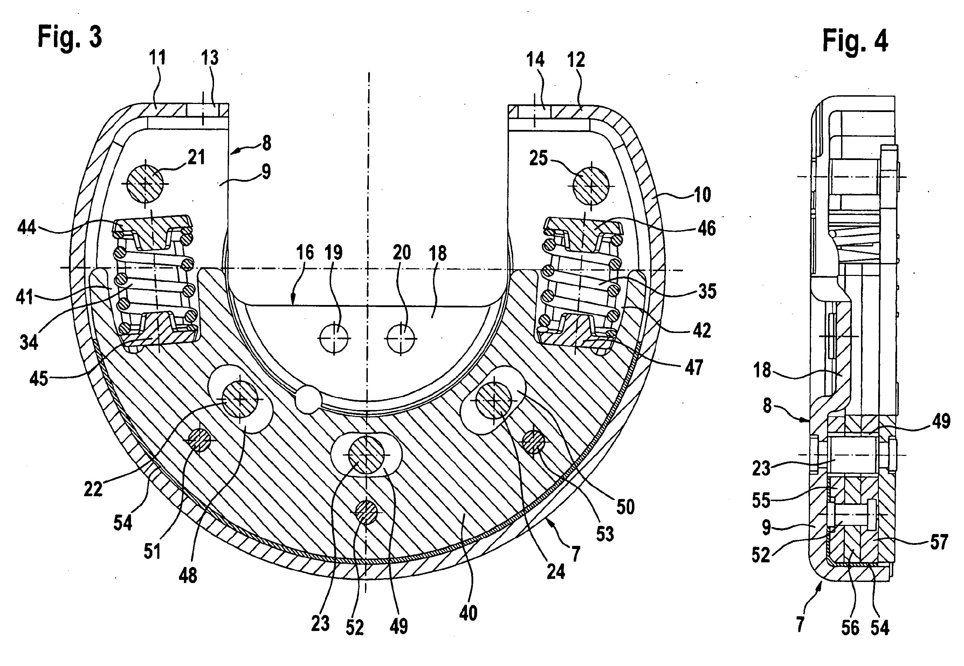

In Figur 3 sieht man, dass die Enden der Federelemente 34, 35 in Näpfen 44 bis 47 oder Scheiben aufgenommen sind. In Umfangsrichtung zwischen den Ausnehmungen 41, 42 sind in der Schwungmasse 40 drei Langlöcher 48, 49, 50 ausgespart, die sich im Wesentlichen in Umfangsrichtung erstrecken. Die Langlöcher 48 bis 50 sind in einem radial inneren Bereich der Schwungmasse 40 angeordnet. Radial außerhalb der Langlöcher 48, 50 ist jeweils ein Vormontageniet 51, 53 vorgesehen. Radial außen ist an der Schwungmasse 50 ein Gleitlagerelement 54 angebracht, dessen Außenseite innen an dem abgewinkelten Umfangsrand 10 des Gehäusebodens 8 anliegt.

In Figur 4 sieht man, dass die Schwungmasse 40 drei gleich ausgebildete Schwungmassenbleche 55 bis 57 umfasst. Die drei Schwungmassenbleche 55 bis 57 sind mit Hilfe der Vormontageniete 51 bis 53 aneinander befestigt.

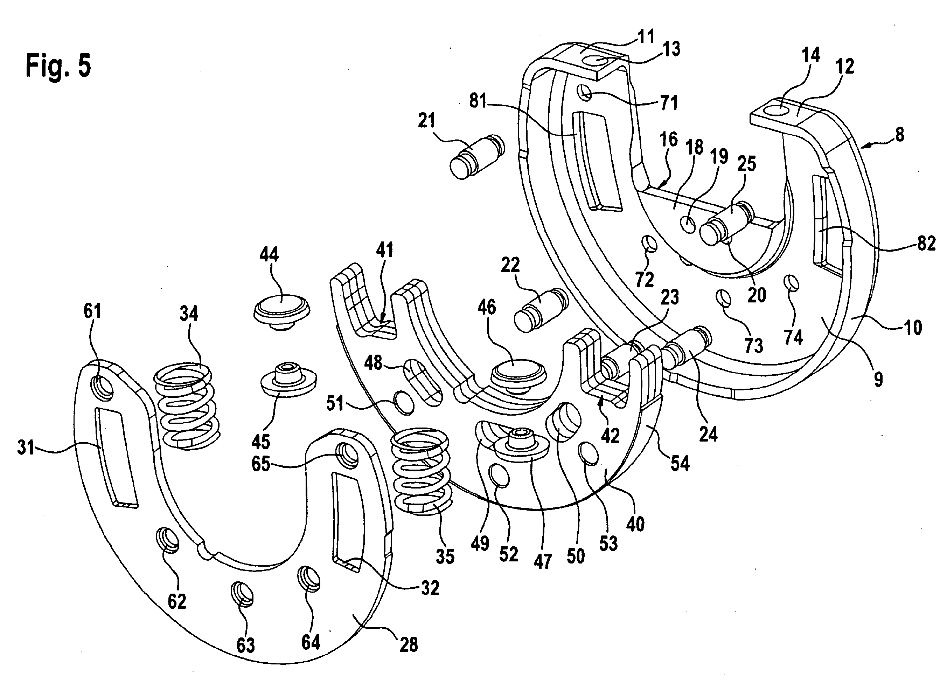

In Figur 5 sieht man, dass der Gehäusedeckel 28 fünf Durchgangslöcher 61 bis 65 zum Befestigen der Abstandsbolzen 21 bis 25 aufweist. In gleicher Weise sind in der Kreisscheibe 9 des Gehäusebodens 8 Durchgangslöcher 71 bis 74 für die Abstandsbolzen vorgesehen. Des Weiteren sind fluchtend zu den Fenstern 31, 32 des Gehäusedeckels der Kreisscheibe 9 des Gehäusebodens 8 zwei Fenster 81, 82 ausgespart.

### Bezugszeichenliste

1. Drehschwingungsdämpfer
2. Radialschraube
3. Radialschraube
4. Axialschraube
5. Axialschraube
6. Kurbelwelle
7. Gehäuse
8. Gehäuseboden
9. Kreisscheibe
10. Umfangsrand
11. Abflachung
12. Abflachung
13. Durchgangsloch
14. Durchgangsloch
16. rechteckförmige Aussparung
18. Ansatz
19. Durchgangsloch
20. Durchgangsloch
21. Abstandsbolzen
22. Abstandsbolzen
23. Abstandsbolzen
24. Abstandsbolzen
25. Abstandsbolzen
28. Gehäusedeckel
31. Fenster
32. Fenster
34. Federelement
35. Federelement
40. Schwungmasse
41. Ausnehmung
42. Ausnehmung
44. Napf oder Scheibe
45. Napf
46. Napf
47. Napf
48. Langloch
49. Langloch
50. Langloch
51. Vormontageniet
52. Vormontageniet
53. Vormontageniet
54. Gleitlagerelement
55. Schwungmassenblech
56. Schwungmassenblech
57. Schwungmassenblech
61. Durchgangsloch
62. Durchgangsloch
63. Durchgangsloch
64. Durchgangsloch
71. Durchgangsloch
72. Durchgangsloch
73. Durchgangsloch
74. Durchgangsloch
81. Fenster
82. Fenster

## Patentansprüche

1. Drehschwingungsdämpfungseinrichtung, zur Anbringung an einer Kurbelwelle (6) eines Kolbenmotors, mit einem Gehäuse (7), das an der Kurbelwelle (6) befestigt und mit dem, unter Zwischenschaltung von Federelementen (34, 35), mindestens eine Schwungmasse (40, 55-57) gekoppelt ist, die die Gestalt einer Teilkreisringscheibe mit zwei Umfangsenden aufweist und an der radial außen mindestens eine Gleitfläche vorgesehen ist, die sich in Reibeingriff mit dem Gehäuse (7) befindet, wobei die beiden Umfangsenden der Schwungmasse (40) in Umfangsrichtung zwischen zwei Federelementen (34, 35) eingespannt sind, wobei die beiden Federelemente eine geringe Federsteifigkeit haben, so dass die Federelemente zur Zentrierung und zur Rückstellung der Schwungmasse im Betrieb dienen und ein Anschlagen der Schwungmasse in Umfangsrichtung an das Gehäuse verhindern, und wobei die Schwungmasse (40) mehrere Langlöcher (48, 49, 50) aufweist, durch die sich am Gehäuse (7) befestigte Abstandsbolzen (22, 23, 24) erstrecken, und die in einem radial inneren, im wesentlichen kreisbogenförmigen Bereich, angeordnet sind so dass die Schwungmasse einen radial nach außen verschobenen Schwerpunkt aufweist, wodurch die fliehkraftabhängige Reibungsdämpfung verstärkt und eine Schwingungsankopplung durch Reibung erreicht wird.

2. Drehschwingungsdämpfungseinrichtung nach Anspruch 1, **dadurch gekennzeichnet, dass** an den Umfangsenden der Schwungmasse (40) jeweils eine Ausnehmung (41, 42) zur Aufnahme eines Endes des zugehörigen Federelements (34, 35) vorgesehen ist.

3. Drehschwingungsdämpfungseinrichtung nach einem der vorhergehenden Ansprüche, **dadurch gekennzeichnet, dass** die zwei Federelemente (34, 35) jeweils in mindestens einer länglichen Aussparung (31, 32, 81, 82) des Gehäuses (7) eingespannt sind.

4. Drehschwingungsdämpfungseinrichtung nach Anspruch 1 oder 2, **dadurch gekennzeichnet, dass** die Drehschwingungsdämpfungseinrichtung ein Wangentilger ist.

5. Drehschwingungsdämpfungseinrichtung nach Anspruch 1 oder 2, **dadurch gekennzeichnet, dass** der Kolbenmotor eine Brennkraftmaschine ist.

6. Kurbelwelle für einen Kolbenmotor, mit mehreren Wangen, **dadurch gekennzeichnet; dass** eine Drehschwingungsdämpfungseinrichtung (1) nach einem der vorhergehenden Ansprüche in mindestens eine Wange der Kurbelwelle (6) integriert ist.

7. Kurbelwelle nach Anspruch 6, **dadurch gekennzeichnet, dass** der Kolbenmotor eine Brennkraftmaschine ist.

8. Kolbenmotor, mit einer Kurbelwelle (6) nach Anspruch 6.

## Claims

1. Torsional vibration damping device for attachment to a crankshaft (6) of a piston engine, with a housing (7) which is fastened to the crankshaft (6) onto which is coupled, with spring elements (34, 35) interposed, at least one flywheel mass (40, 55-57) which is in the form of a partial annular disk with two circumferential ends and on which is provided radially on the outside at least one sliding face which is in frictional engagement with the housing (7), the two circumferential ends of the flywheel mass (40) being tension-mounted in the circumferential direction between two spring elements (34, 35), the two spring elements having low spring rigidity, so that the spring elements serve for centring and resetting the flywheel mass during operation and prevent the flywheel mass from striking against the housing in the circumferential direction, and the flywheel mass (40) having a plurality of long holes (48, 49, 50), through which spacer bolts (22, 23, 24) fastened to the housing (7) extend and which are arranged in a radially inner essentially circularly arcuate region, so that the flywheel mass has a centre of gravity displaced radially outwards, with the result that the frictional damping dependent upon centrifugal force is reinforced and vibratory coupling is achieved by friction.

2. Torsional vibration damping device according to Claim 1, **characterized in that** a recess (41, 42) for receiving one end of the associated spring element (34, 35) is provided at each of the circumferential ends of the flywheel mass (40).

3. Torsional vibration damping device according to one of the preceding claims, **characterized in that** the two spring elements (34, 35) are tension-mounted in each case in at least one elongate clearance (31, 32, 81, 82) of the housing (7).

4. Torsional vibration damping device according to Claim 1 or 2, **characterized in that** the torsional vibration damping device is a web-type absorber.

5. Torsional vibration damping device according to Claim 1 or 2, **characterized in that** the piston engine is an internal combustion engine.

6. Crankshaft for a piston engine with a plurality of webs, **characterized in that** a torsional vibration damping device (1) according to one of the preceding claims is integrated into at least one web of the crankshaft (6).

7. Crankshaft according to Claim 6, **characterized in that** the piston engine is an internal combustion engine.

8. Piston engine with a crankshaft (6) according to Claim 6.

## Revendications

1. Amortisseur de vibrations torsionnelles, destiné à être monté sur un vilebrequin (6) d'un moteur à piston, comprenant un boîtier (7) qui est fixé au vilebrequin (6) et auquel est accouplé, par l'intermédiaire d'éléments ressort (34, 35), au moins une masse d'inertie (40, 55-57) qui présente la forme d'un disque annulaire circulaire partiel doté de deux extrémités périphériques et sur lequel est prévu radialement à l'extérieur au moins une surface de glissement qui se trouve en engagement par friction avec le boîtier (7), les deux extrémités périphériques de la masse d'inertie (40) étant serrées dans la direction périphérique entre deux éléments ressort (34, 35), les deux éléments ressort ayant une faible raideur de ressort, de telle sorte que les éléments ressort servent au centrage et au rappel de la masse d'inertie lors du fonctionnement et empêchent la masse d'inertie de buter contre le boîtier dans la direction périphérique, et la masse d'inertie (40) comprenant plusieurs trous oblongs (48, 49, 50) à travers lesquels s'étendent des boulons d'écartement (22, 23, 24) fixés au boîtier (7), et lesquels sont disposés dans une région radialement intérieure essentiellement en forme d'arc de cercle, de telle sorte que la masse d'inertie présente un centre de gravité décalé radialement vers l'extérieur, de sorte que l'amortissement par friction dépendant de la force centrifuge soit amplifié et qu'un couplage des vibrations par friction soit obtenu.

2. Amortisseur de vibrations torsionnelles selon la revendication 1, **caractérisé en ce qu'**une cavité respective (41, 42) pour recevoir une extrémité de l'élément ressort associé (34, 35) est prévue aux extrémités périphériques de la masse d'inertie (4o) .

3. Amortisseur de vibrations torsionnelles selon l'une quelconque des revendications précédentes, **caractérisé en ce que** les deux éléments ressort (34, 35) sont serrés respectivement dans au moins un évidement allongé (31, 32, 81, 82) du boîtier (7).

4. Amortisseur de vibrations torsionnelles selon la revendication 1 ou 2, **caractérisé en ce que** l'amortisseur de vibrations torsionnelles est un amortisseur de flasque.

5. Amortisseur de vibrations torsionnelles selon la revendication 1 ou 2, **caractérisé en ce que** le moteur à piston est un moteur à combustion interne.

6. Vilebrequin pour un moteur à piston, comprenant plusieurs flasques, **caractérisé en ce qu'**un amortisseur de vibrations torsionnelles (1) selon l'une quelconque des revendications précédentes est intégré à au moins un flasque du vilebrequin (6).

7. Vilebrequin selon la revendication 6, **caractérisé en ce que** le moteur à piston est un moteur à combustion interne.

8. Moteur à piston comprenant un vilebrequin (6) selon la revendication 6.
